# EUROPÄISCHE PATENTSCHRIFT

(11) **EP 3 807 911 B1**
(45) Veröffentlichungstag und Bekanntmachung des Hinweises auf die Patenterteilung: **09.03.2022**
(21) Anmeldenummer: 19734288.4
(22) Anmeldetag: 14.06.2019
(51) Int. Cl.: H01B 13/06

(54) **VERFAHREN ZUR HERSTELLUNG VON LACKBESCHICHTETEN ELEKTROBÄNDERN UND LACKBESCHICHTETES ELEKTROBAND**
METHOD FOR PRODUCING PAINT-COATED ELECTRICAL STRIPS AND PAINT-COATED ELECTRICAL STRIP
PROCÉDÉ POUR FABRIQUER DES BANDES POUR CIRCUITS MAGNÉTIQUES REVÊTUES DE PEINTURE ET BANDE POUR CIRCUITS MAGNÉTIQUES REVÊTUE DE PEINTURE

(30) Priorität: 14.06.2018 DE 102018209553
(43) Veröffentlichungstag der Anmeldung: 21.04.2021
(73) Patentinhaber: voestalpine Stahl GmbH, 4020 Linz (AT)
(72) Erfinder: STRAUSS, Bernhard, 4060 Leonding (AT); FLUCH, Ronald, 4020 Linz (AT); TIEFENTHALLER, Roman, 4030 Linz (AT)
(74) Vertreter: Lambsdorff & Lange Patentanwälte Partnerschaft mbB
(86) Internationale Anmeldenummer: PCT/EP2019/065678
(87) Internationale Veröffentlichungsnummer: WO 2019/238925

(56) Entgegenhaltungen:
- EP-A1- 3 060 031
- EP-A1- 3 206 213
- US-A1- 2003 175 524
- US-A1- 2017 117 758

## Beschreibung

Die Erfindung betrifft ein Verfahren zur Herstellung eines lackbeschichteten Elektrobandes sowie ein lackbeschichtetes Elektroband.

Beschichtete Elektrobänder werden in der Elektroindustrie verwendet und bilden dort das Ausgangsmaterial beim Bau von Elektrokernen, die in Generatoren, Elektromotoren, Transformatoren oder anderen elektrischen Geräten eingesetzt werden. Derartige Elektrokerne werden durch Zuschneiden des beschichteten Elektrobands in einzelne Blechlamellen, Stapeln der Blechlamellen und Verbinden (z.B. Verkleben) derselben zu einem Lamellenpaket hergestellt. Durch den Schichtaufbau wird das Auftreten von Wirbelströmen im Elektrokern weitgehend unterbunden, wodurch sich der Wirkungsgrad des Elektrokerns deutlich erhöht.

Je nach Anwendung werden Elektrobleche unterschiedlicher Stahllegierungen, weichmagnetischer Eigenschaften, Verlustleistungen, Dicken und anderer je nach Einsatzgebiet wichtigen Eigenschaften gewählt.

Es ist bereits bekannt, das Elektroband bei der Herstellung mit einer Isolierlackschicht zu überziehen, die später die elektrische Isolation der Elektrolamellen im Blechstapel sicherstellt. Klebefähige Isolierlackschichten, die (zusätzlich zur Isolierung) auch eine Verklebung der Elektrolamellen im Blechstapel ermöglichen, werden als Backlackschichten bezeichnet. Backlackschichten enthalten einen Klebstoff, der beim Verklebeprozess (Verbacken des Lamellenpakets) aktiviert wird und dem Lamellenpaket die benötigte Formstabilität verleiht.

Da die Isolierlackschichten das elektrisch wirksame Volumen eines Elektrokerns reduzieren, werden für einen hohen Wirkungsgrad möglichst dünne Schichtdicken angestrebt. Auf der anderen Seite muss die Schichtdicke ausreichend groß sein, um die erforderliche Isolationssicherheit über die Lebensdauer des Elektrokerns garantieren zu können.

Ein weiterer Aspekt ist eine ausreichende Haftung der Isolierlackschicht auf dem Elektroband, die insbesondere bei höherlegierten Elektrobändern vermindert sein kann.

Bestehende Beschichtungsanlagen bringen die Isolierlackschicht auf das geglühte und gegebenenfalls gereinigte (gewaschene und gegebenenfalls gebürstete), blanke Elektroband auf. Durch die Reinigung wird eine gleichmäßige und verbesserte Lackanhaftung ermöglicht.

EP 3 060 031 A1 beschreibt ein Coil-Coating-Verfahren, bei welchem auf eine Flachseite eines Metallbandes eine aushärtbare polymere Grundierung zur Ausbildung einer elektrisch isolierenden Grundierungsschicht und auf diese ein aushärtbarer polymerer Lack zur Ausbildung einer elektrisch isolierenden Lackschicht aufgebracht und gehärtet werden. Dabei wird zwischen der Grundierungsschicht und der Lackschicht wenigstens eine elektrische Leiterbahn aufgedruckt.

EP 3 206 213 A1 beschreibt ein Banddurchlaufverfahren zur Herstellung eines Elektrobandlaminats, bei dem ein erstes Elektroband und ein zweites Elektroband an ihren Flachseiten aneinander gedrückt und zu einem Elektrobandlaminat stoffschlüssig verbunden werden.

US 2017/117758 A1 beschreibt ein Elektroblech für Stapelanwendungen, das ein Elektrostrahlblech und eine Isolationsbeschichtung auf wenigstens einer Oberfläche des Elektrostahlbleches aufweist, die eine Martens-Härte HM zwischen 50 und 500 hat.

US 2003/175524 A1 beschreibt ein magnetisches Stahlband mit einer Isolationsbeschichtung, die zwischen 20 und 90 Gew.-% Fluorkohlenstoffharz als oberste Beschichtungslage des magnetischen Stahlbandes aufweist.

Eine der Erfindung zugrundeliegende Aufgabenstellung kann darin gesehen werden, ein Verfahren zur Herstellung eines lackbeschichteten Elektrobands zu schaffen, welches Lackbeschichtungen mit guter Haftung, Isolationsfestigkeit und Alterungsbeständigkeit ermöglicht. Insbesondere sollen geringe Beschichtungsdicken erreichbar sein. Ferner zielt die Erfindung darauf ab, ein lackbeschichtetes Elektroband mit den genannten Eigenschaften anzugeben.

Die Aufgabenstellung wird durch die Merkmale der unabhängigen Ansprüche gelöst. Ausführungsbeispiele und Weiterbildungen sind Gegenstand der Unteransprüche.

Demnach umfasst ein Verfahren zur Herstellung eines beschichteten Elektrobandes ein Auftragen einer Vorbehandlungsschicht über einer ersten Flachseite eines gewalzten Elektrobandes, wobei die Schichtdicke der Vorbehandlungsschicht zwischen 10 und 100 nm, insbesondere 20 und 50 nm beträgt, und ein Beschichten des mit der Vorbehandlungsschicht überzogenen gewalzten Elektrobandes mit einer Isolierlackschicht über der Vorbehandlungsschicht, wobei die Isolierlackschicht durch eine Rollenapplikation unter Verwendung einer Rolle aufgetragen wird, und wobei nach dem Auftragen der Vorbehandlungsschicht und vor dem Beschichten mit der Isolierlackschicht keine gezielte Trocknung und/oder Vernetzung der Vorbehandlungsschicht erfolgt.

Durch das Aufbringen der Vorbehandlungsschicht wird eine Qualitätssteigerung bei der Isolierlackbeschichtung erreicht. Generell und besonders ausgeprägt bei höher legierten Elektrobändern lässt sich eine Haftungsverbesserung der Isolierlackschicht am Elektroband erzielen. Ferner hat sich gezeigt, dass durch die Vorbehandlungsschicht die Alterungsbeständigkeit der Isolierlackschicht verbessert werden kann und darüber hinaus - in überraschender Weise - auch eine Erhöhung der Isolationswirkung der Isolierlackschicht erzielbar ist.

Wegen ihrer geringen Schichtdicke trägt die Vorbehandlungsschicht nur unwesentlich zur Gesamtschichtdicke des Beschichtungsprozesses bei. Aufgrund der Verbesserung der Schichteigenschaften der Isolierlackschicht sowie der vergleichsweise sehr geringen Schichtdicke der Vorbehandlungsschicht wird davon ausgegangen, dass die Verwendung der Vorbehandlungsschicht eine Verkleinerung der Gesamtbeschichtungsdicke bei vergleichbaren Schichteigenschaften in Bezug auf Isolationsfestigkeit, Alterungsbeständigkeit und/oder Schichthaftung ermöglicht. Verringerte Schichtdicken ermöglichen eine Verbesserung des Wirkungsgrads der aus dem Elektroband hergestellten Elektrokerne.

Nach dem Auftragen der Vorbehandlungsschicht und vor dem Beschichten mit der Isolierlackschicht wird keine gezielte Trocknung und/oder Vernetzung der Vorbehandlungsschicht benötigt und auch nicht durchgeführt. Aufgrund der geringen Schichtdicke der Vorbehandlungsschicht kann eine gewisse Antrocknung der Vorbehandlungsschicht auch ohne eine gezielte Trocknung (d.h. ohne zusätzliche Energiezufuhr durch Strahlung, Wärme, etc.) erfolgen.

Bei Verwendung einer bereits vorhandenen Beschichtungsanlage mit zwei im Inline-Prozess hintereinander geschalteten Beschichtungsstationen kann das Verfahren sehr kostengünstig im Herstellungswerk implementiert werden, indem die im Bandlauf erste Beschichtungsstation für die Beschichtung mit der Vorbehandlungsschicht umfunktioniert wird, während die Isolierlackschicht dann in der zweiten Beschichtungsstation lediglich mit einer einzigen Rollenapplikation aufgetragen wird.

Bei der Isolierlackschicht kann es sich insbesondere um eine Backlackschicht handeln. In diesem Fall wird ein beschichtetes Elektroband hergestellt, welches neben der Isolationswirkung auch ein Verbacken von Elektrobandlamellen zu einem formstabilen Elektrokern ermöglicht. Eine Backlackschicht ist eine thermohärtbare wasserbasierte Schmelzklebelackschicht, welche beispielsweise ein Epoxidharz oder eine Epoxidharzmischung und mindestens einen latenten Härter wie beispielsweise Dicyandiamid aufweist. Ein Härter macht aus einem Thermoplasten einen Duroplasten.

Beispielsweise wird die Vorbehandlungsschicht durch eine Rollenapplikation unter Verwendung einer der Rolle im Bandlaufweg vorgeschalteten (ersten) Rolle aufgetragen. Andere Aufbringungsverfahren, wie beispielsweise Druckverfahren oder Sprühverfahren, sind ebenfalls möglich.

Vor dem Auftragen der Vorbehandlungsschicht kann eine Reinigung des gewalzten Elektrobandes durch Waschen und/oder Bürsten oder andere mechanische und/oder chemische Reinigungsschritte erfolgen, um eine möglichst fremdkörperfreie, blanke Metalloberfläche zur Verfügung zu stellen.

Die Vorbehandlungsschicht kann generell aus ausschließlich organischen Bestandteilen oder aus einer Zusammensetzung bestehen, die neben organischen Bestandteilen auch anorganische Bestandteile enthält. Beispielsweise kann Phosphorsäure enthalten sein. Die Vorbehandlungsschicht kann beispielsweise aus einer Zusammensetzung enthaltend 1,0%wt bis 5,0%wt, insbesondere 1,5%wt bis 3,0%wt Polyvinylalkohol (PVAL: C₂H₄O), 0,01%wt bis 0,5%wt, insbesondere 0,05%wt bis 0,3%wt Phosphorsäure (H₃PO₄), der Rest ein organisches oder anorganisches Lösungsmittel und/oder Wasser, bestehen. In allen genannten Fällen kann die Vorbehandlungsschicht frei von jeglichem Härter sein. Die Vorbehandlungsschicht kann kein (einen latenten Härter enthaltenden) Backlack sein.

Die Vorbehandlungsschicht kann direkt auf der aus einer Stahloberfläche des Elektrobandes bestehenden ersten Flachseite des gewalzten Elektrobandes aufgetragen werden.

Die Isolierlackschicht kann in ähnlicher Weise ebenfalls direkt auf eine Oberfläche der zuvor applizierten Vorbehandlungsschicht aufgetragen werden.

Beispielsweise kann die Schichtdicke der Isolierlackschicht zwischen 1 und 12 µm betragen. Die Schichtdicke der Isolierlackschicht kann insbesondere gleich oder kleiner als 6 µm, 4 µm, 2 µm oder 1 µm sein.

Ein lackbeschichtetes Elektroband weist ein gewalztes Elektroband, eine Vorbehandlungsschicht über einer ersten Flachseite des gewalzten Elektrobandes und eine Isolierlackschicht über der Vorbehandlungsschicht auf. Ein solches lackbeschichtetes Elektroband kann eine hohe Beschichtungsqualität in Bezug auf Haftung, Alterungsbeständigkeit und/oder Isolationsfestigkeit der Isolierlackschicht zeigen. Diese Vorteile können bei Verwendung von höher legierten Elektrobändern und/oder der Verwendung eines Backlacks als Isolierlackschicht in besonderem Maße zum Tragen kommen.

Die Vorbehandlungsschicht kann einen anorganischen Bestandteil, insbesondere Phosphor enthalten, wodurch die Vorbehandlungsschicht beispielsweise durch eine einfache Untersuchung des lackbeschichteten Elektrobandes auf die (anorganischen) chemischen Bestandteile der Vorbehandlungsschicht nachweisbar ist.

Das Elektroband kann einen Gesamtlegierungsanteil (von Si und Al, gegebenenfalls einschließlich weiterer Legierungselemente) von gleich oder mehr als 1,0%wt, 2,0%wt, 3,0%wt oder 4,0%wt aufweisen. Insbesondere können höchstlegierte Güten als Elektroband verwendet werden. Insbesondere kann das Elektroband einen Si-Anteil von gleich oder mehr als 0,8%wt, 1,5%wt, 2,0%wt oder 3,0%wt aufweisen.

Nachfolgend werden Ausführungsbeispiele und Weiterbildung in beispielhafter Weise anhand der schematischen Zeichnungen erläutert, wobei in den Zeichnungen teilweise ein unterschiedlicher Detailierungsgrad verwendet wird. Gleiche Bezugszeichen bezeichnen dieselben oder ähnliche Teile.
Figur 1 zeigt in Längsschnittdarstellung einen beispielhaften Prozess des Auftragens einer Vorbehandlungsschicht und einer Isolierlackschicht über der Vorbehandlungsschicht auf einem Elektroband sowie eine Trocknung der Schichten in einer Trocknungsanlage.
Figur 2 zeigt in Längsschnittdarstellung beispielhaft einen oberflächennahen Ausschnitt aus einem Elektroband nach der Schichttrocknung.
Figur 3 zeigt ein Coil aus einem beschichteten Elektroband gemäß einer Ausführungsform.
Figur 4 zeigt einen Elektroblechstapel, der aus übereinander gestapelten beschichteten Elektroblechlamellen aufgebaut ist.
Figur 5 veranschaulicht in beispielhafter Weise den Verlauf der Rollschälfestigkeit (Auseinanderreißkraft in N/mm) gegenüber der Alterungszeit von verklebten Elektroblechstreifenproben bei thermischer Alterung für unterschiedliche Zusammensetzungen der Vorbehandlungsschicht und ohne Vorbehandlungsschicht.
Figur 6 veranschaulicht in beispielhafter Weise die Rollschälfestigkeit (Auseinanderreißkraft in N/mm) für unterschiedliche Isolierlacke (Backlacke) von verklebten Elektroblechstreifenproben jeweils mit und ohne Vorbehandlungsschicht.
Figur 7 veranschaulicht in beispielhafter Weise den Verlauf der Rollschälfestigkeit (Auseinanderreißkraft in N/mm) gegenüber der Alterungszeit von verklebten Elektroblechstreifenproben bei hydrothermaler Alterung mit und ohne Vorbehandlungsschicht.
Figur 8 veranschaulicht in beispielhafter Weise Messwerte für den elektrischen Isolationswiderstand (in Ohm × cm²) von beschichteten Elektroblechstreifenproben mit unterschiedlichen Vorbehandlungsschichten und ohne Vorbehandlungsschicht.

Begriffe wie "Aufbringen" oder "Auftragen" sowie ähnliche Begriffe (z.B. "aufgebracht" bzw. "aufgetragen") sind in dieser Beschreibung im Allgemeinen nicht so zu verstehen, dass die aufgebrachten bzw. aufgetragenen Schichten einen direkten Kontakt zu der Oberfläche, auf der sie aufgebracht bzw. aufgetragen werden, aufweisen müssen. Es können dazwischenliegende Elemente oder Schichten zwischen den "aufgebrachten" oder "aufgetragenen", Elementen oder Schichten und der darunterliegenden Oberfläche vorhanden sein. Jedoch können die oben erwähnten oder ähnliche Begriffe in dieser Offenbarung auch die spezielle Bedeutung haben, dass die Elemente oder Schichten einen direkten Kontakt zu der darunterliegenden Oberfläche haben, d.h. dass keine dazwischenliegenden Elemente oder Schichten vorhanden sind.

Der Begriff "über", der in Bezug auf ein Element oder eine Materialschicht verwendet wird, das oder die "über" einer Oberfläche gebildet oder angebracht wird, kann hier in der Bedeutung verwendet werden, dass das Element oder die Materialschicht "indirekt auf" der Oberfläche angebracht wird, wobei zwischenliegende Elemente oder Schichten zwischen der Oberfläche und dem Element oder der Materialschicht vorhanden sein können. Jedoch kann der Begriff "über" auch die spezielle Bedeutung haben, dass das Element oder die Materialschicht, die "über" einer Oberfläche aufgebracht oder aufgetragen wird, "direkt auf", d.h. z.B. in direktem Kontakt mit der betreffenden Oberfläche angebracht wird. Das Gleiche gilt analog für ähnliche Begriffe wie z.B. "darüberliegend", "unter", "darunterliegend" usw.

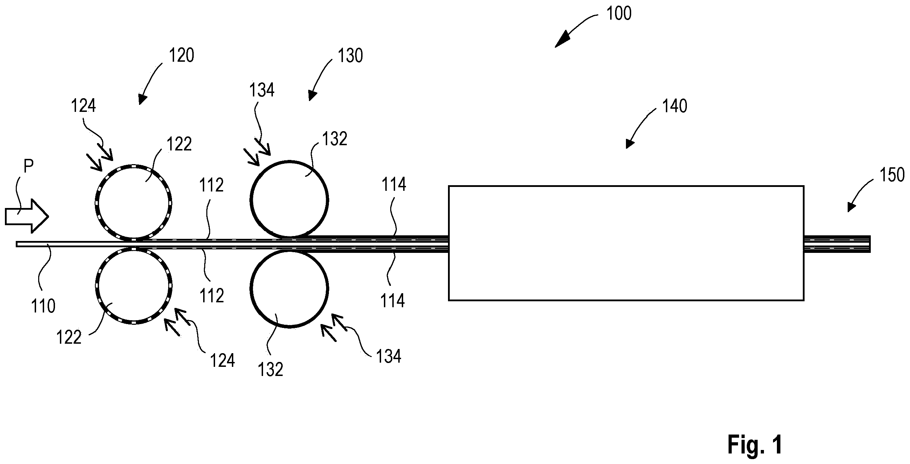

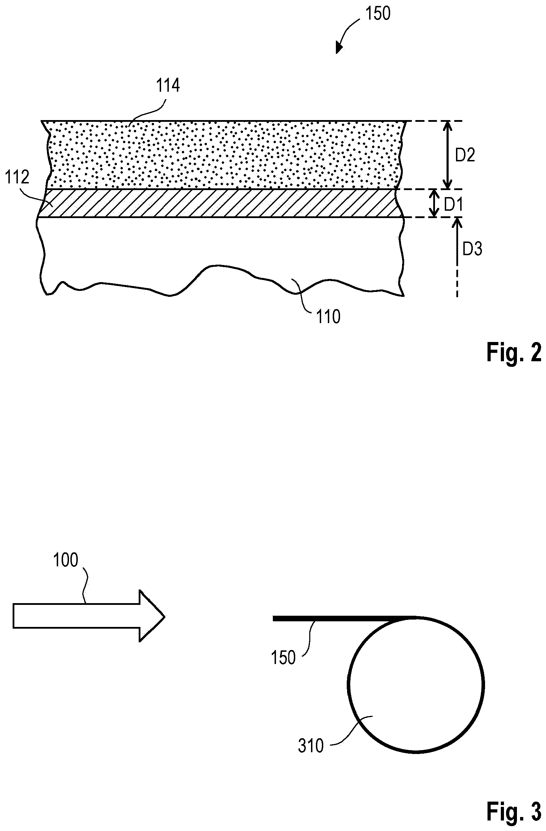

Figur 1 zeigt beispielhaft ein Verfahren zur Herstellung eines beschichteten Elektrobands 200 (siehe Figur 2) aus einem Elektroband 110 in einer Bandbeschichtungsanlage 100. Das Elektroband 110 wird der Bandbeschichtungsanlage 100 im kontinuierlichen Bandlauf (siehe Pfeil P) zugeführt. Bei dem Elektroband 110 kann es sich beispielsweise um ein kaltgewalztes, nicht kornorientiertes Elektroblech im schlussgeglühten Zustand handeln (z.B. DIN EN 10106). Andere Elektrobleche, beispielsweise warmgewalzte und/oder nicht-schlussgeglühte Elektrobleche usw. sind ebenfalls möglich. Kaltgewalzte oder warmgewalzte Elektrobleche werden beispielsweise als Polbleche in Erregermaschinen und Generatoren oder in Transformatoren usw. eingesetzt.

Das der Bandbeschichtungsanlage 100 zugeführte Elektroband 110 kann beispielsweise in Form eines "endlosen" Metallbandes vorliegen, das gegebenenfalls von einem Coil (nicht dargestellt) in Pfeilrichtung P abgewickelt wird.

Die Bandbeschichtungsanlage 100 umfasst zumindest eine Vorbehandlungsstation 120 und eine Beschichtungsstation 130. Ferner kann sie eine Trocknungsanlage 140, beispielsweise einen Trockeneinbrennofen, aufweisen.

Die Beschichtungsanlage 100 ist in dem hier dargestellten Beispiel als beidseitige Beschichtungsanlage 100 dargestellt. Es ist jedoch auch möglich, dass lediglich eine Flachseite des Elektrobandes 110 (beispielsweise die in Figur 1 dargestellte Oberseite) beschichtet wird. Insofern gelten sämtliche Angaben im Folgenden sowohl für den Fall einer einseitigen Beschichtung als auch für die dargestellte Möglichkeit, das Elektroband 110 auf beiden Flachseiten zu beschichten. Im zweiten Fall (beidseitige Beschichtung) können sämtliche Angaben zur Vorbehandlung, Beschichtung und Trocknung sowohl für die Prozessierung der Bandoberseite als auch für die Prozessierung der gegenüberliegenden Bandunterseite des Elektrobandes 110 gelten. Ferner kann auch eine beidseitige Vorbehandlung und Beschichtung mit unterschiedlichen Schichten auf den beiden Bandseiten vorgenommen werden.

Bei dem Elektroband 110 kann es sich beispielsweise um das relativ niedriglegierte Elektroband isovac^{®} 800-50A (mit 0,6%wt Si und 0,4%wt Al) handeln, wobei eine Vielzahl anderer Elektroblechbänder bzw. isovac^{®}-Erzeugnisse - insbesondere mit höheren Legierungsanteilen - ebenfalls eingesetzt werden können.

Das unbeschichtete und gegebenenfalls chemisch und/oder mechanisch gereinigte Elektroband 110 wird in der Vorbehandlungsstation 120 mit einer Vorbehandlungsschicht 112 überzogen. Die Beschichtung kann vollflächig erfolgen, d.h. die Vorbehandlungsschicht 112 kann die Oberfläche des Elektrobandes 110 vollständig abdecken.

Die Vorbehandlungsschicht 112 kann durch eine Rolle bzw. Walze 122 (bzw. ein Rollen- oder Walzenpaar 122) auf die obere Flachseite (bzw. auch auf die gegenüberliegende untere Flachseite) des Elektrobandes 110 aufgetragen werden. Bei einer Rollenapplikation läuft die Rolle 122 auf dem sich bewegenden Elektroband 110 ab und lagert dabei eine flüssige Vorbehandlungssubstanz 124, die zuvor auf die Rolle 122 aufbracht wurde, in Form eines dünnen Films auf der Oberfläche des Elektrobandes 110 ab. Dabei lässt sich die Schichtdicke der Vorbehandlungsschicht 112 durch die Parameter der Rollenapplikation relativ genau einstellen.

Nach der Aufbringung der Vorbehandlungsschicht 112 auf eine oder beide Seiten des Elektrobandes 110 läuft das vorbehandelte Elektroband 110 durch die Beschichtungsstation 130. In der Beschichtungsstation 130 wird z.B. durch eine Rolle 132 (bzw. ein Rollenpaar 132) eine nasse Isolierlackschicht 114 auf die Vorbehandlungsschicht 112 aufgebracht. Die Aufbringung kann ebenfalls durch Rollenapplikation erfolgen, wobei wiederum die Schichtdicke (gemessen nach der Trocknung) durch Parameter der Rollenapplikation relativ genau einstellbar ist. Auch die Lackbeschichtung 114 kann vollflächig erfolgen, d.h. die Oberfläche der Vorbehandlungsschicht 112 vollständig abdecken.

Bei der beidseitig unterschiedlichen Beschichtung kann beispielsweise auf der Unterseite des Elektrobandes 110 eine andere Isolierlackschicht 114 als auf der Oberseite aufgebracht werden. Beispielsweise kann auf der Unterseite (Oberseite) eine Backlackschicht und auf der Oberseite (Unterseite) eine Isolierlackschicht ohne Klebeeigenschaften aufgebracht werden.

Die Vorbehandlungsbeschichtung 112 dient dazu, die Haftung des Isolierlacks 134 auf dem Elektroband 110 zu steigern. Insbesondere hochlegierte Elektroblechbänder zeigen eine erhöhte Bildung von Aluminium- und/Siliziumoxiden an der Oberfläche, welche die Haftung der Isolierlackschicht auf dem Elektroband 110 negativ beeinflussen kann. Durch die Vorbehandlungsschicht 112 wird der Isolierlackschicht 114 ein verbesserter Haftgrund geboten.

Höchstlegierte Elektroblechbänder können beispielsweise einen Gesamtlegierungsanteil von gleich oder mehr als 4%wt aufweisen. Beispielsweise können höchstlegierte Elektroblechbänder einen Siliziumanteil von gleich oder mehr als 3%wt aufweisen und beispielsweise einen Aluminiumanteil von gleich oder mehr als 1%wt aufweisen.

Die Vorbehandlungsschicht 112 kann relativ dünn sein und etwa 10 nm bis 100 nm Dicke aufweisen. Insbesondere sind Dicken unter 50 nm einstellbar und ermöglichen bereits eine deutliche Verbesserung der Lackanhaftung.

Als Vorbehandlungssubstanzen 124 können rein organische Substanzen sowie auch organische Substanzen mit anorganischen Bestandteilen eingesetzt werden. Beispielsweise kann die Vorbehandlungsschicht 112 Polyvinylalkohol (PVAL), Phosphorsäure (PS) und ein organisches und/oder anorganisches Lösungsmittel, beispielsweise Wasser, enthalten oder aus diesen Bestandeilen bestehen.

Bei dem Isolierlack 134 kann es sich um einen klebefähigen Isolierlack, d.h. einen Backlack handeln, welcher ein trockenes Verkleben der Elektroblechlamellen im Elektrokern ohne zusätzliche Verbindungsmittel (wie beispielsweise Schweißverbindungen) ermöglicht. Isolierlacke 134 ohne Klebefunktion können ebenfalls eingesetzt werden.

Es können beispielsweise Isolierlacke der Isolierstoffklassen C3/EC-3, C4/EC-4, C5/EC-5 oder C6/EC-6 Verwendung finden. Isolierlacke 134 der Isolierstoffklasse C3/EC-3 sind ungefüllte Lacke auf organischer Basis, die rein organische Bestandteile enthalten können und zum Isolieren von Elektroblechlamellen dienen, die keinem weiteren Glühprozess unterworfen werden. Diese Lacke weisen hervorragende Stanzeigenschaften auf.

Isolierlacke 134 der Isolierstoffklasse C4/EC-4 sind anorganische Isolierbeschichtungen, die glühbeständig sind und gute Schweißeigenschaften aufweisen. Diese anorganischen, wasserverdünnbaren Isolierlacke vermeiden das Zusammenkleben von Elektroblechen beim Glühen.

Isolierlacke 134 der Isolierstoffklasse C5/EC-5 sind ungefüllte Lacke auf organischer oder anorganischer Basis für Anwendungen, die höhere Isoliereigenschaften, Hitzebeständigkeit und gegebenenfalls verbesserte Schweißbarkeit erfordern.

Isolierlacke 134 der Isolierstoffklasse C6/EC-6 sind gefüllte Lacke auf organischer oder anorganischer Basis, die nochmals verbesserte Isoliereigenschaften und erhöhte Druckfestigkeiten bieten. Diese Lacke basieren auf thermisch stabilen, organischen Polymeren mit einem hohen Anteil an anorganischen Füllstoffen. Sie werden insbesondere eingesetzt für große Elektrokerne mit hoher Druck- und Temperaturbelastung.

Die Vorbehandlungsstation 120 und die Beschichtungsstation 130 können räumlich und - bezogen auf die Bandlaufgeschwindigkeit - zeitlich in geringem Abstand voneinander angeordnet sein. Beispielsweise kann vorgesehen sein, dass der räumliche Abstand zwischen der Vorbehandlungsstation 120 und der zweiten Beschichtungsstation 130 (d.h. beispielsweise der Abstand zwischen den Achsen der Rollen 122 und 132) gleich oder kleiner als 10 m, 8 m, 6 m, 5 m oder 4 m ist. Die Zeitdauer zwischen der Aufbringung der Vorbehandlungsschicht 112 in der Vorbehandlungsstation 120 und der Aufbringung der Isolierlackschicht 114 in der Beschichtungsstation 130 kann gleich oder kleiner als 20 s, 15 s, 10 s, 5 s oder 3 s sein. Übliche Bandlaufgeschwindigkeiten können beispielsweise im Bereich von 100 m/min liegen, wobei dieser Wert beispielsweise um ±10%, ± 20%, ±30%, ±40% oder ±50% variieren kann.

Im Bandlaufweg hinter der Beschichtungsstation 130 befindet sich beispielsweise der Trockenofen 140. Der zeitliche und räumliche Abstand zwischen der zweiten Beschichtungsstation 130 und dem Eintritt in den Trockenofen 140 kann beispielsweise dieselben Werte aufweisen, die vorstehend für den zeitlichen und räumlichen Abstand zwischen der Vorbehandlungsstation 120 und der Beschichtungsstation 130 genannt wurden.

In dem Trockenofen 140 erfolgt eine Trocknung der Isolierlackschicht 114. Der Trockenofen 140 kann hierfür als Durchlauftrockenofen (Tunnelofen) ausgelegt sein, der von dem beschichteten Elektroband 110 kontinuierlich durchlaufen wird. Beispielsweise kann die maximale Temperatur des Elektrobandes 110 im Trockenofen 140 zwischen 150°C und 300°C betragen, wobei insbesondere Temperaturwerte gleich oder größer als 170°C, 180°C, 190°C, 200°C, 210°C, 220°C oder 230°C und/oder gleich oder kleiner als 250°C, 220°C, 210°C, 200°C oder 190°C vorgesehen sein können.

Die Dauer der Wärmebehandlung in dem Trockenofen 140 kann beispielsweise zwischen 10 s und 40 s betragen und insbesondere kleiner, gleich oder größer als 20 s oder 30 s sein. Andere Temperaturen und Wärmebehandlungszeitdauern sind ebenfalls möglich.

Im Trockenofen 140 kann sich zwischen der Vorbehandlungsschicht 112 und der Isolierlackschicht 114 eine physikalische und/oder chemische Bindung (kovalente Bindung) ausbilden. Hierdurch wird die Haftung erhöht. Die Isolierlackschicht 114 wird zumindest soweit getrocknet, dass sie im Bandlaufweg ausgangsseitig des Trockenofens 140 mechanisch stabil und abriebfest mit dem Elektroband 110 verbunden ist. Dies ermöglicht dann das weitere Handling des getrockneten, beschichteten Elektrobandes 150 im Bandlauf hinter dem Trockenofen 140 beispielsweise durch Umlenkrollen oder durch Aufwickeln zu einem Coil (in Figur 1 nicht dargestellt).

Figur 2 zeigt in Längsschnittansicht in vereinfachter Darstellung einen oberflächennahen Ausschnitt des beschichteten Elektrobandes 110 im Bereich hinter dem Trockenofen 140. Schichtdickenschwankungen sind nicht dargestellt. Die Querschnittsansicht kann identisch mit der gezeigten Längsschnittansicht sein.

Die (trockene) Vorbehandlungsschicht 112 weist eine Dicke D1 auf und die (trockene) Isolierlackschicht (z.B. Backlackschicht) 114 weist eine Dicke D2 auf. Die Schichtdicke D1 kann beispielsweise um gleich oder mehr als den Faktor 10, 25 oder 50 kleiner als die Schichtdicke D2 sein. Beispielsweise kann die Schichtdicke D2 gleich oder größer oder kleiner als 2 µm, 3 µm, 4 µm, 5 µm, 6 µm, 7 µm, 8 µm, 9 µm, 10 µm, 11 µm oder 12 µm sein. Die Blechdicke D3 des Elektrobandes 110 kann beispielsweise gleich oder kleiner als 0,5 mm, 0,4 mm, 0,35 mm oder 0,3 mm sein.

Figur 3 veranschaulicht ein Coil (Wickel) 310 des beschichteten Elektrobandes 150, wie es ausgangsseitig der Bandbeschichtungsanlage 100 aufgewickelt werden kann. Das Coil 310 kann beispielsweise zum Kunden ausgeliefert und dort zum Elektrokern weiterverarbeitet werden.

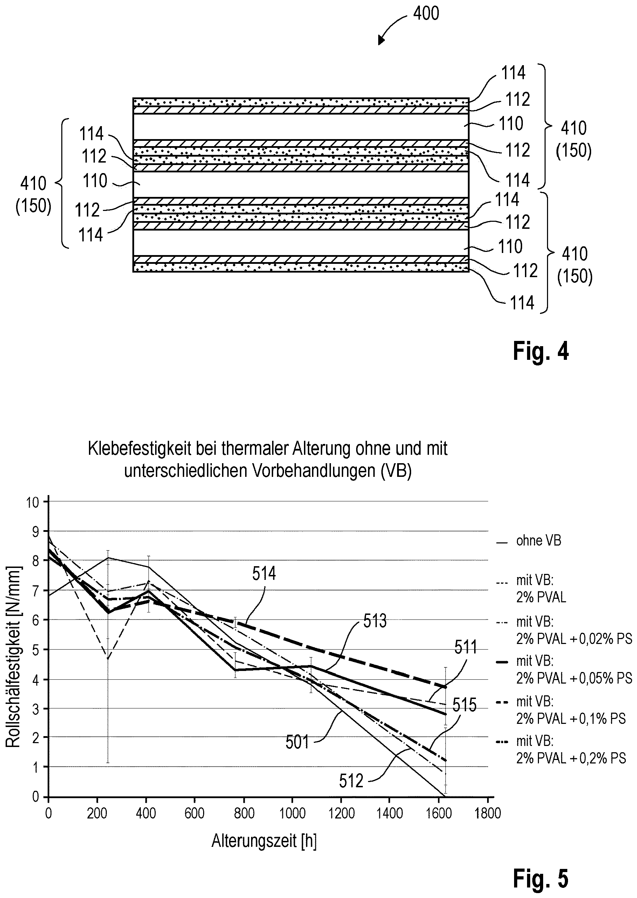

Figur 4 zeigt in schematischer Ansicht einen Ausschnitt aus einem Elektrokern 400, der durch Stapeln von Elektroblechen 410, die durch Querteilung des beschichteten, getrockneten Elektrobandes 150 erhalten werden, realisiert ist.

Üblicherweise werden die Elektrobleche 410 vor dem Stapeln durch einen Formzuschnitt in ihre Endform gebracht, beispielsweise durch Stanzen oder Laserschneiden.

Sofern es sich bei den Isolierlackschichten 114 um Backlackschichten handelt, wird der Blechstapel durch Aushärtung der Isolierlackschichten 114 verfestigt. Der Verfestigungsmechanismus beruht auf einer chemischen Reaktion, üblicherweise einem dreidimensionalen Vernetzen des Klebstoffes in der Isolierlackschicht (Backlackschicht) 114. Das Aushärten des Backlackes kann durch eine Verspannung der geschichteten Elektrobleche 410 und einer Erwärmung des Schichtstapels, beispielsweise in einem Ofen, erfolgen. Handelt es sich bei den Isolierlackschichten 114 nicht um einen Backlack, werden andere Maßnahmen (z.B. Schweißen) zur Verfestigung des Schichtstapels (Lamellenpaketes) eingesetzt.

In dem hier dargestellten Beispiel ist ein Elektrokern 400 dargestellt, der aus einem beidseitig beschichteten Elektroblech 410 hergestellt ist. Wie bereits erwähnt, können auch einseitig beschichtete Elektrobleche 410 oder beidseitig unterschiedlich beschichtete Elektrobleche 410 verwendet werden, wodurch gegebenenfalls höhere Stapelfaktoren erreichbar werden. Die Figur 4 ist aufgrund zu großer Dicken der Vorbehandlungsschichten 112 nicht maßstäblich.

Das Schaubild der Figur 5 zeigt die Wirkung unterschiedlicher Vorbehandlungsschichten 112 auf die Festigkeit einer Verklebung von zwei Elektroblechen, die mit einem Backlack als Isolierlackschicht 114 beschichtet wurden. Dargestellt ist die Auseinanderreißkraft (Rollschälfestigkeit), die benötigt wird, um zwei verklebte Elektrobleche wieder auseinander zu reißen. Dabei beziehen sich die Versuchsergebnisse auf unterschiedliche Zeitdauern einer thermischen Alterung, die bei 180°C bei Normalatmosphäre durchgeführt wurde.

Erkennbar ist, dass für sämtliche Proben die Festigkeit der Verbindung mit zunehmender Alterungszeit nachlässt. Bei einer Probe 501, die ohne eine Vorbehandlungsschicht 112 unter der jeweiligen Backlackschicht 114 hergestellt wurde, betrug die Restklebekraft nach 1630 Stunden (h) nur noch 0 N/mm, d.h. die Klebeverbindung war gelöst. Die Proben 511, 512, 513, 514 und 515 wurden mit einer Vorbehandlungsschicht 112 erzeugt, welche 2,0%wt Polyvinylalkohol (PVAL) und einen unterschiedlichen Anteil an Phosphorsäure (PS), der Rest Wasser, enthielten. Der Phosphorsäurezusatz betrug 0,0%wt bei der Probe 511, 0,02%wt bei der Probe 512, 0,05%wt bei der Probe 513, 0,1%wt bei der Probe 514 und 0,2%wt bei der Probe 515.

Sämtliche Vorbehandlungsvarianten reduzieren den Haftungsverlust als Folge der thermischen Alterung, d.h. sie sind besser als keine Vorbehandlung. Dies ist vermutlich darauf zurückzuführen, dass die Backlackschicht(en) 114 aufgrund der darunterliegenden Vorbehandlungsschicht(en) 112 eine bessere Haftung an dem Elektroband110 aufweisen. Beispielsweise erscheint ein Phosphorsäureanteil von 0,05%wt bis 0,2%wt, insbesondere etwa bei 0,1%wt (z.B. ±50%, ±100% oder ±200%) besonders vorteilhaft in Bezug auf die Aufrechterhaltung der Haftung/Klebekraft bei (thermischer) Alterung. Den Versuchen lag das relativ niedriglegierte Elektroband isovac^{®} 800-50A (mit 0,6%wt Si und 0,4%wt Al) zugrunde.

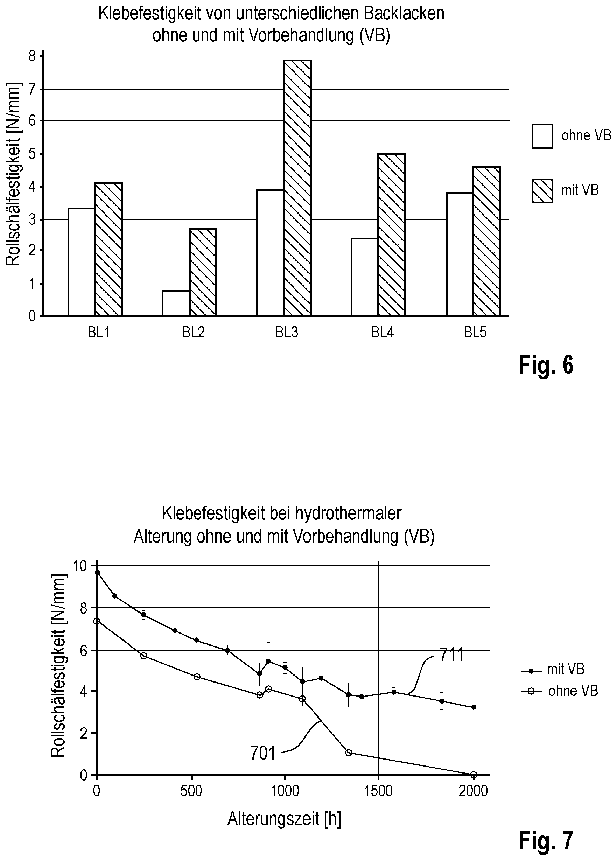

Figur 6 zeigt Versuchsergebnisse zur Haftung von unterschiedlichen Backlacken an einem hochlegierten (Gesamtlegierungsanteil ≥ 4%wt, hier 2,5%wt Si und 1,5%wt Al) Elektroband 110. Die Vorbehandlungssubstanz 124 enthielt jeweils 2%wt PVAL und 0,2%wt Phosphorsäure, der Rest Wasser (d.h. entspricht der Probe 515 in Figur 5). Die unterschiedlichen Backlacke sind mit BL1, BL2, BL3, BL4 und BL5 bezeichnet, die rechten Säulen der Balkenpaare beziehen sich auf vorbehandelte Proben aus verklebten Elektrostreifen, während die linken Balken identische Proben, jedoch ohne Vorbehandlungsschicht 112 unter den jeweiligen Backlackschichten 114, betreffen.

Die Figur 6 zeigt, dass alle Backlackvarianten mit Vorbehandlung besser sind als ohne Vorbehandlung. Figur 6 zeigt auch, dass unterschiedliche Backlacke Klebeverbindungen mit sehr unterschiedlichen Festigkeiten ausbilden.

Figur 7 zeigt Versuchsergebnisse zur hydrothermalen Alterung von Proben aus zwei verklebten streifenförmigen Elektroblechen. Die Proben wurden mit derselben Backlackschicht (jeweils BL1 aus Figur 6), jedoch einmal ohne Vorbehandlungsschicht (Kurve 701) und einmal mit Vorbehandlungsschicht (Kurve 711) erzeugt. Die hydrothermale Alterung erfolgte bei 85°C und einer relativen Feuchtigkeit von 85%. Die Vorbehandlungssubstanz war 2%wt PVAL ohne Phosphorsäure (entspricht Kurve 511 aus Figur 5), als Elektroband 110 wurde ein niedriglegiertes Elektroband (isovac^{®} 800-50A, mit 0,6%wt Si und 0,4%wt Al) verwendet.

Figur 7 zeigt, dass die hydrothermale Alterung mit Vorbehandlung besser ist als ohne Vorbehandlung. Bei der Probe 701 ohne Vorbehandlung bestand nach 2000 Stunden (h) kein Zusammenhalt der verklebten Elektroblechstreifen mehr, während bei der Probe mit einer Vorbehandlungsschicht auch nach 2000 Stunden (h) noch eine Rollschälfestigkeit von etwas weniger als 4 N/mm vorhanden war. Ferner zeigt Figur 7, dass die initiale Haftung (bei h = 0) aufgrund des hier verwendeten niedriglegierten Elektrobleches deutlich höher ist als in der Darstellung der Figur 6 mit hochlegiertem Elektroband (bei demselben Backlack BL1).

Überraschenderweise hat sich ferner gezeigt, dass durch die Verwendung einer Vorbehandlungsschicht 112 der elektrische Isolationswiderstand zwischen benachbarten Elektroblechen verbessert wird. Dies ist insofern überraschend, da die Isolationswirkung der Backlackschicht 114 üblicherweise als Volumeneffekt angesehen wird und nur in geringem Maße von Oberflächeneigenschaft der Backlackschicht abhängen sollte.

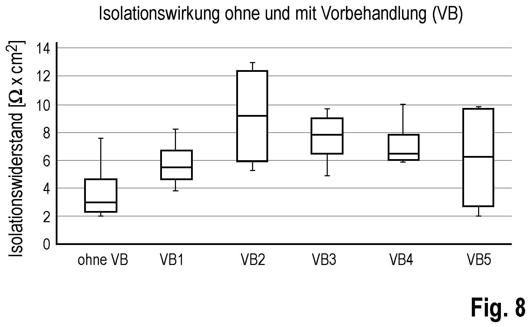

Die Versuchsergebnisse der Figur 8 beziehen sich auf Proben von beschichteten Elektroblechstreifen, die ohne Vorbehandlungsschicht 112 (ohne VB) sowie mit unterschiedlichen Vorbehandlungsschichten 112 (VB1, VB2, VB3, VB4, VB5) hergestellt wurden. Die Vorbehandlungssubstanz VB2 mit maximalem Isolationswiderstand entspricht hier der in Figur 5 bei Kurve 514 eingesetzten Vorbehandlungssubstanz (2,0%wt PVAL, 0,1%wt Phosphorsäure, Rest Wasser). Bei sämtlichen Proben wurden dieselben Isolierlackschichten 114 (d.h. dieselben Materialien und dieselben Schichtdicken) eingesetzt. Als Elektroband 110 wurde wiederum isovac^{®} 800-50A (0,6%wt Si und 0,4%wt Al) verwendet.

Figur 8 verdeutlicht, dass der Isolationswiderstand bei allen Vorbehandlungsvarianten besser als ohne Vorbehandlung ist, d.h. durch die Verwendung einer Vorbehandlungsschicht 112 wird der Isolationswiderstand stets erhöht (vergleiche ohne VB mit VB1-VB5). Dabei geben die horizontalen Mittelstriche der jeweiligen Messbalken den Mittelwert des Isolationswiderstandes über eine Vielzahl von Proben an, die Balkenlänge bezeichnet die Streuung bei +25% und -25% der Versuchsergebnisse bezogen auf den Mittelwert, und die vertikalen Toleranzstriche geben die gemessenen Minimal- und Maximalwerte des Isolationswiderstands bei der entsprechenden Probencharge an.

Es wird davon ausgegangen, dass die Versuchsergebnisse der Figuren 5 bis 8 auf die entsprechenden Eigenschaften der Elektrokerne 400 verallgemeinert werden können, so dass davon auszugehen ist, dass Elektrokerne 400, die aus Elektroblechlamellen mit Vorbehandlungsschichten 112 unterhalb der Isolierlackschichten 114 hergestellt werden, ebenfalls verbesserte Eigenschaften in Bezug auf Alterung, hydrothermale Alterung, Festigkeit des Lamellenpaketes und elektrische Isolationswirkung der Isolierlackschichten 114 aufweisen.

Insbesondere kann vorgesehen sein, derartige Elektrokerne 400 mit Kühlkanälen in dem geklebten Lamellenpaket auszurüsten, da die Gefahr einer Korrosion durch Unterwanderung der Isolierlackschichten 114 durch Feuchtigkeit deutlich verringert ist (siehe Figur 7).

Im Folgenden werden Beispiele eines lackbeschichteten Elektrobandes beschrieben.

Dieses kann ein gewalztes Elektroband, eine Vorbehandlungsschicht über einer ersten Flachseite des gewalzten Elektrobandes und eine Isolierlackschicht über der Vorbehandlungsschicht aufweisen.

## Patentansprüche

1. Verfahren zur Herstellung eines beschichteten Elektrobands (150), umfassend:
Auftragen einer Vorbehandlungsschicht (112) über einer ersten Flachseite eines gewalzten Elektrobandes (110), wobei die Schichtdicke der Vorbehandlungsschicht (112) zwischen 10 und 100 nm, insbesondere 20 und 50 nm beträgt; und
Beschichten des mit der Vorbehandlungsschicht (112) überzogenen qewalzten Elektrobandes (110) mit einer Isolierlackschicht (114) über der Vorbehandlungsschicht (112), wobei die Isolierlackschicht (114) durch eine Rollenapplikation unter Verwendung einer Rolle (132) aufgetragen wird, und wobei nach dem Auftragen der Vorbehandlungsschicht (112) und vor dem Beschichten mit der Isolierlackschicht (114) keine gezielte Trocknung und/oder Vernetzung der Vorbehandlungsschicht erfolgt.

2. Verfahren nach Anspruch 1, wobei die Isolierlackschicht (114) eine Backlackschicht ist.

3. Verfahren nach Anspruch 1 oder 2, wobei die Vorbehandlungsschicht (112) durch eine Rollenapplikation unter Verwendung einer der Rolle (132) im Bandlaufweg vorgeschalteten Rolle (122) aufgetragen wird.

4. Verfahren nach einem der vorhergehenden Ansprüche, wobei vor dem Auftragen der Vorbehandlungsschicht (112) eine Reinigung des gewalzten Elektrobands (110) durch Waschen und/oder Bürsten erfolgt.

5. Verfahren nach einem der vorhergehenden Ansprüche, wobei die Vorbehandlungsschicht (112) aus einer Zusammensetzung enthaltend einen organischen Bestandteil und einen anorganischen Bestandteil besteht.

6. Verfahren nach einem der vorhergehenden Ansprüche, wobei die Vorbehandlungsschicht (112) aus einer Zusammensetzung enthaltend 1,0%wt bis 5,0%wt, insbesondere 1,5%wt bis 3,0%wt Polyvinylalkohol, 0,01%wt bis 0,5%wt, insbesondere 0,05%wt bis 0,3%wt Phosphorsäure, der Rest ein organisches oder anorganisches Lösungsmittel und/oder Wasser besteht.

7. Verfahren nach einem der vorhergehenden Ansprüche, wobei die Vorbehandlungsschicht (112) frei von jeglichem Härter ist.

8. Verfahren nach einem der vorhergehenden Ansprüche, wobei die Vorbehandlungsschicht (112) direkt auf der aus einer Stahloberfläche des Elektrobandes (110) bestehenden ersten Flachseite des gewalzten Elektrobandes aufgetragen wird.

9. Verfahren nach einem der vorhergehenden Ansprüche, wobei die Isolierlackschicht (114) direkt auf eine Oberfläche der Vorbehandlungsschicht (112) aufgetragen wird.

10. Verfahren nach einem der vorhergehenden Ansprüche, wobei die Schichtdicke der Isolierlackschicht (114) zwischen 1 und 12 µm beträgt.

11. Verfahren nach einem der vorhergehenden Ansprüche, wobei die Schichtdicke der Isolierlackschicht (114) gleich oder kleiner als 6 µm, 4 µm, 2 µm, oder 1 µm ist.

12. Verfahren nach einem der vorhergehenden Ansprüche, ferner umfassend:
Auftragen einer weiteren Vorbehandlungsschicht (112) über einer zweiten Flachseite eines gewalzten Elektrobandes; und
Beschichten des mit der weiteren Vorbehandlungsschicht (112) überzogenen qewalzten Elektrobandes (110) mit einer weiteren Isolierlackschicht (114) über der weiteren Vorbehandlungsschicht (112).
Beschichten des mit der weiteren Vorbehandlungsschicht überzogenen qewalzten Elektrobandes mit einer weiteren Isolierlackschicht über der weiteren Vorbehandlungsschicht.

## Claims

1. Method of manufacturing a coated electrical strip (150) comprising:
applying a pretreatment layer (112) over a first flat side of a rolled electrical strip (110), the layer thickness of the pretreatment layer (112) being between 10 and 100 nm, in particular 20 and 50 nm; and
coating of the rolled electrical strip (110) coated with the pretreatment layer (112) with an insulating lacquer layer (114) over the pretreatment layer (112), wherein the insulating lacquer layer (114) is applied by a roller application using a roller (132), and wherein after the application of the pretreatment layer (112) and before the coating with the insulating lacquer layer (114) no specific drying and/or crosslinking of the pretreatment layer takes place.

2. Method of claim 1, wherein the insulating lacquer layer (114) is a baked lacquer layer.

3. Method of claim 1 or 2, wherein the pretreatment layer (112) is applied by a roller application using a roller (122) upstream of the roller (132) in the strip path.

4. Method of any one of the preceding claims, wherein prior to application of the pretreatment layer (112), the rolled electrical strip (110) is cleaned by washing and/or brushing.

5. Method of any one of the preceding claims, wherein the pretreatment layer (112) comprises a composition comprising an organic component and an inorganic component.

6. Method of any one of the preceding claims, wherein the pretreatment layer (112) consists of a composition comprising 1.0%wt to 5.0%wt, in particular 1.5%wt to 3.0%wt polyvinyl alcohol, 0.01%wt to 0.5%wt, in particular 0.05%wt to 0.3%wt phosphoric acid, the remainder an organic or inorganic solvent and/or water.

7. Method of any one of the preceding claims, wherein the pretreatment layer (112) is free of any hardener.

8. Method of any one of the preceding claims, wherein the pretreatment layer (112) is applied directly to the first flat side of the rolled electrical strip consisting of a steel surface of the electrical strip (110).

9. Method of any one of the preceding claims, wherein the insulating lacquer layer (114) is applied directly to a surface of the pretreatment layer (112).

10. Method of any one of the preceding claims, wherein the layer thickness of the insulating lacquer layer (114) is between 1 and 12 µm.

11. Method of any one of the preceding claims, wherein the layer thickness of the insulating lacquer layer (114) is equal to or less than 6 µm, 4 µm, 2 µm, or 1 µm.

12. Method of any one of the preceding claims, further comprising:
applying a further pretreatment layer (112) over a second flat side of a rolled electrical strip; and
coating the rolled electrical strip (110) coated with the further pretreatment layer (112) with a further insulating lacquer layer (114) over the further pretreatment layer (112).

## Revendications

1. Procédé pour la fabrication d'un feuillard électrique revêtu (150), comprenant:
- l'application d'une couche de prétraitement (112) sur une première face plane d'un feuillard électrique laminé (110), l'épaisseur de la couche de prétraitement (112) étant située entre 10 et 100 nm, en particulier entre 20 et 50 nm; et
- le revêtement du feuillard électrique laminé (110) revêtu de la couche de prétraitement (112) par une couche de vernis isolant (114) au-dessus de la couche de prétraitement (112), la couche de vernis isolant (114) étant appliquée par une application au rouleau à l'aide d'un rouleau (132) et aucun séchage et/ou aucune réticulation ciblé (e) (s) n'ayant lieu après l'application de la couche de prétraitement (112) et avant le revêtement par la couche de vernis isolant (114).

2. Procédé selon la revendication 1, la couche de vernis isolant (114) étant une couche de vernis de base.

3. Procédé selon la revendication 1 ou 2, la couche de prétraitement (112) étant appliquée par une application au rouleau à l'aide d'un rouleau (122) disposé en amont du rouleau (132) dans le trajet du feuillard.

4. Procédé selon l'une quelconque des revendications précédentes, un nettoyage du feuillard électrique laminé (110) par lavage et/ou brossage ayant lieu avant l'application de la couche de prétraitement (112) .

5. Procédé selon l'une quelconque des revendications précédentes, la couche de prétraitement (112) étant constituée par une composition contenant un constituant organique et un constituant inorganique.

6. Procédé selon l'une quelconque des revendications précédentes, la couche de prétraitement (112) étant constituée par une composition contenant 1,0% en poids à 5,0% en poids, en particulier 1,5% en poids à 3,0% en poids de poly(alcool vinylique), 0,01% en poids à 0,5% en poids, en particulier 0,05% en poids à 0,3% en poids d'acide phosphorique, le reste étant un solvant organique ou inorganique et/ou de l'eau.

7. Procédé selon l'une quelconque des revendications précédentes, la couche de prétraitement (112) étant exempte d'un quelconque durcisseur.

8. Procédé selon l'une quelconque des revendications précédentes, la couche de prétraitement (112) étant appliquée directement sur la première face plane du feuillard électrique laminé, constituée par une surface d'acier du feuillard électrique (110).

9. Procédé selon l'une quelconque des revendications précédentes, la couche de vernis isolant (114) étant appliquée directement sur une surface de la couche de prétraitement (112).

10. Procédé selon l'une quelconque des revendications précédentes, l'épaisseur de la couche de vernis isolant (114) étant située entre 1 et 12 µm.

11. Procédé selon l'une quelconque des revendications précédentes, l'épaisseur de la couche de vernis isolant (114) étant inférieure ou égale à 6 µm, à 4 µm, à 2 µm ou à 1 µm.

12. Procédé selon l'une quelconque des revendications précédentes, comprenant en outre:
- l'application d'une autre couche de prétraitement (112) sur une deuxième face plane d'un feuillard électronique laminé; et
- le revêtement du feuillard électrique laminé (110) revêtu par l'autre couche de prétraitement (112) par une autre couche de vernis isolant (114) sur l'autre couche de prétraitement (112).
